Europäisches Patentamt

European Patent Office

Office européen des brevets

(11) Publication number: **0 227 069**
A2

## (12) EUROPEAN PATENT APPLICATION

(21) Application number: **86117767.3**

(22) Date of filing: **19.12.86**

(51) Int. Cl.⁴: **G 11 B 5/64**

(30) Priority: **25.12.85 JP 290794/85**
**25.12.85 JP 290795/85**

(43) Date of publication of application:
**01.07.87 Bulletin 87/27**

(84) Designated Contracting States:
**DE GB**

(71) Applicant: **HITACHI, LTD.**
**6, Kanda Surugadai 4-chome**
**Chiyoda-ku Tokyo 101(JP)**

(72) Inventor: **Furusawa, Kenji**
**Hitachi Hachimanyama Apt. 414 1545, Yoshida-cho**
**Totsuka-ku Yokohama-shi Kanagawa-ken(JP)**

(72) Inventor: **Takagaki, Tokuho**
**Iimura Haitsu 202 1021, Harajuku-cho Totsuka-ku**
**Yokohama-shi Kanagawa-ken(JP)**

(72) Inventor: **Abe, Katsuo**
**5-2-5, Take**
**Yokosuka-shi Kanagawa-ken(JP)**

(74) Representative: **Patentanwälte Beetz sen. - Beetz jun.**
**Timpe - Siegfried - Schmitt-Fumian**
**Steinsdorfstrasse 10**
**D-8000 München 22(DE)**

(54) **Middle layer material for magnetic disc.**

(57) The magnetic film (103) for the magnetic disc is required to have an improved squareness ratio in order to achieve the faster access time than before. This requirement is met by providing a middle layer (102) between the disc substrate (101) and the magnetic thin film (103) according to the known technology. In this invention, the improvement in squareness ratio was accomplished by considering the arrangement of the material forming the middle layer (102). Namely, the middle layer (102) is formed by sputtering so that it has the diagonal micro arrangement. The middle layer (102) can be produced from a variety of materials to produce the desired effect.

*FIG. 1*

**0227069**

MIDDLE LAYER MATERIAL FOR MAGNETIC DISC

BACKGROUND OF THE INVENTION

The present invention relates to a magnetic thin film of a magnetic disc, and more particularly, it relates to a magnetic recording medium characterized by the composition of the middle layer.

The conventional magnetic recording medium used for the magnetic disc unit is usually of such a structure that a discontinuous medium is coated on the disc substrate. The discontinuous medium is a magnetic recording medium produced by dispersing particles of magnetic material such as $\gamma-Fe_2O_3$, $CrO_2$, Fe, and Fe-Co into an organic resin binder and applying the resulting mixture to a disc substrate, followed by drying and baking. The thus produced magnetic recording medium is discontinuous at intervals of the size of magnetic particles.

One of the requirements for recording magnetic materials is that the value of $\Delta Br/\Delta H$ should be high and constant over a broad range of the magnetization curve. Another requirement is that the coercive force Hc should be high to some extent and the Hc/Br ratio should also be high for better high-frequency characteristics. The reason for this is that as the Hc/Br ratio increases the effect of self-demagnetizing becomes less significant when the frequency of electrical signals to magnetize a magnetic material is high, in which case the length of magnetized regions (micro magnets) becomes shorter.

In the case of discontinuous medium, the shape of magnetic particles plays an important role in the improvement of high-frequency characteristics. In actual, the improvement has been accomplished by arranging needle crystals such that the crystal axis is aligned with the direction of magnetization. In order to increase the recording density more, recent research and development are being directed to a magnetic recording material having a high coercive force and squareness ratio. Such a magnetic recording material consists of a continuous thin film formed by plating, vacuum deposition, sputtering, ion plating, or the like.

The subject of increasing the coercive force and squareness ratio is found in the following known literature.

(1) Nippon Telegraph and Telephone Public Corporation's report on the products put to practical use, Vol. 26, No. 2 (1977) p. 585-594. By selecting a proper composition for the material of magnetic medium.

(ii) Japanese Patent Laid-open No. 35332/1985. By providing an intermediate layer between a paramagnetic substrate and a thin film magnetic medium.

(iii) "Physics of Ferromagnetic Material, Part II", by F. Chikado, published by Shokabo, 1984, p. 96-97. By forming a thin-film magnetic medium aslant on a paramagnetic substrate by vacuum vapor deposition.

(iv) Ibidem. p. 56-69. By treating a thin film magnetic medium in a magnetic field while it is being formed or after it has been formed.

Incidentally, the squareness ratio is a scaler defined by

$$S^* = 1 - Mr/\left\{Hc \cdot \frac{dM}{dH}\Big|_{H=Hc}\right\}$$

where, Mr denotes the remanent magnetization and Hc denotes the coercive force in a hysteresis curve in which the intensity of magnetization of the magnetic material is expressed by M and the intensity of magnetic field is expressed by H.

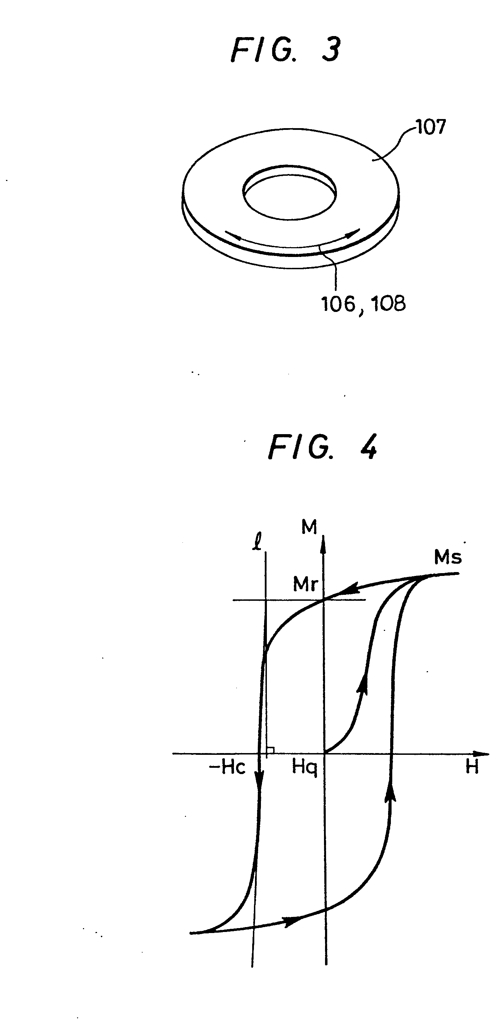

It may also be expressed by $S^* = Hq/Hc$, as shown in Fig. 4 in which the straight line $\ell$ is a tangent which touches the hysteresis curve at the point (-Hc, 0).

The above-mentioned methods have a limit in increasing the coercive force and squareness ratio and do not meet the requirements for the higher recording density of magnetic recording medium.

0227069

## SUMMARY OF THE INVENTION

The present invention contemplates increasing the recording density of the magnetic recording medium.

According to this invention, the object is achieved by a magnetic recording medium of such a structure that a magnetic thin film is formed on a paramagnetic disc substrate, with a middle layer interposed between them, wherein the middle layer consists of a paramagnetic metal and is caused to grow aslant with respect to the disc substrate.

To be more specific, the middle layer is formed by causing metal crystal grains of body-centered cubic structure or close-packed hexagonal structure to grow aslant with respect to the film-forming surface of the disc substrate by means of the "oblique sputtering"

The "oblique sputtering" is defined as a technique for the adhesion of particles from a sputtering target which is performed in a aslant direction with respect to the surface on which a film is formed. The oblique sputtering causes crystal grains of body-centered cubic structure or close-packed hexagonal structure to grow aslant with respect to the disc substrate, whereby forming a middle layer. The aslant grown middle layer gives rise to the magnetic anisotropy parallel to the surface of the disc substrate in the thin magnetic medium formed on the middle layer, and this magnetic anisotropy (referred to as in-plane magnetic anisotropy hereinafter) is responsible for the increasing of coercive force and squareness ratio.

## BRIEF DESCRIPTION OF THE DRAWINGS

Fig. 1 is a partial sectional view of the magnetic recording medium in an embodiment of the present invention.

Fig. 2 is a schematic representation illustrating the sputtering process for preparing the middle layer as shown in Fig. 1.

Fig. 3 is a schematic representation showing the easy direction of magnetization in the thin film magnetic medium.

Fig. 4 is a magnetization curve.

## DETAILED DESCRIPTION OF THE INVENTION

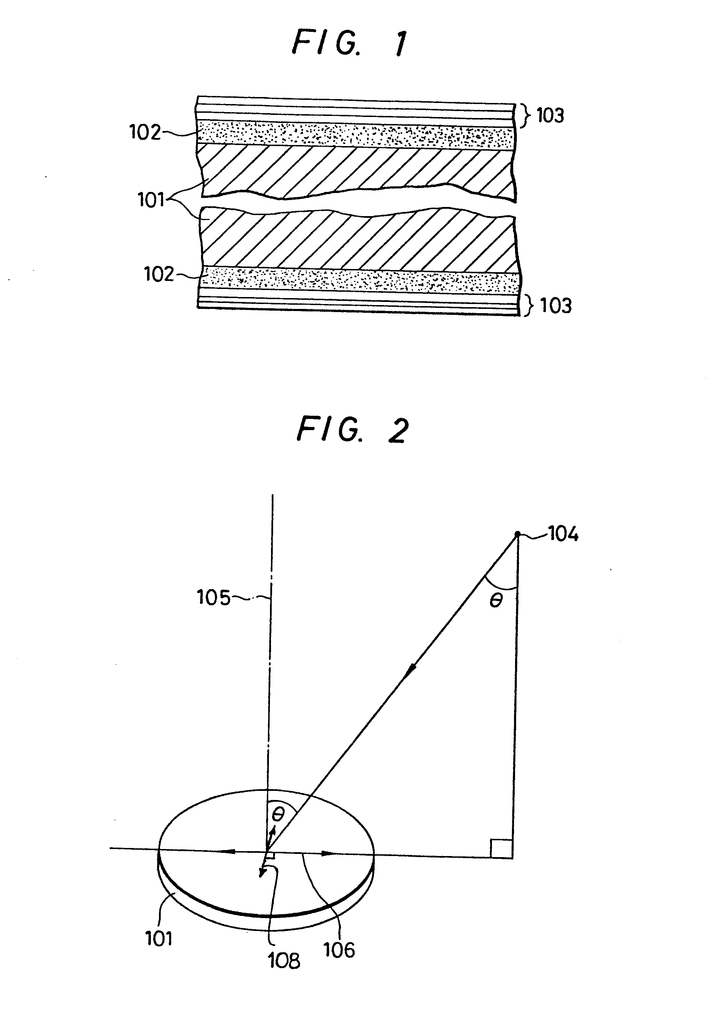

An embodiment of the present invention is described with reference to the drawings. Fig. 1 is a partial sectional view of the magnetic recording medium in an embodiment of the invention. In Fig. 1, there are shown a paramagnetic substrate 101, middle layers 102, and thin film magnetic media 103. Each of the middle layers 102 formed on the paramagnetic substrate 101 consists of a paramagnetic metal thin film of body-centered cubic structure or close-packed hexagonal structure. The thin film magnetic medium 103 is formed on the middle layer 102.

The middle layer 102 is formed by the oblique sputtering technique. The crystal grains of metal thin film which have grown on the paramagnetic substrate 101 has the prismic structure inclined toward the sputtering direction (or the incident direction of the vapor). In this embodiment, the metal thin film is made of Cr, Mo, W, V, Nb, or Ta which forms prismic crystal grains which take on the body-centered cubic structure, or the metal thin film is also made of Ti, Zr, or Zn which forms prismic crystal grains which take on the close-packed hexagonal structure.

Fig.2 is a schematic representation illustrating the process of forming the middle layer 102. The target 104 is placed at the position which is shifted by angle $\Theta$ with respect to the normal line 105 to the paramagnetic substrate 101. The sputtering particles from the target 104 impinge against the paramagnetic substrate 101 at an incident angle of $\Theta$. Therefore, the middle layer 102, in which the crystal grains grow in the direction of incident angle $\Theta$, is formed on the paramagnetic substrate 101. The incident angle should be greater than $45^\circ$.

When the thin film magnetic medium 103 (shown in Fig.1 )is formed , the incident angle $\Theta$ (shown in Fig. 2) should be smaller than $45^\circ$.

Upon formation of the middle layer 102 and the thin film magnetic medium 103 as described above, it is found that there occurs the in-plane magnetic anisotropy in the thin film magnetic medium 103. The direction of the in-plane magnetic anisotropy is controllable to be parallel ( perpendicular ) to the intersection line between the substrate plane 101 and the incidence plane of sputtered particle beam: The middle layer made of the group of Cr, Mo, W, V, and Ta (the group of Ti, Zr, and Zn ) induces the in-plane magnetic anisotropy 106 ( 108 ),which is shown in Fig. 2, parallel ( perpendicular ) to the intersection line described above.

This idea is embodied in this example by properly controlling the means of forming the middle layer 102 and the thin film magnetic medium 103 so that the easy direction of magnetization 106 or 108 coincides with the circumferential direction of the magnetic recording unit 107.

According to the conventional technology as disclosed in the above-mentioned literature (iii), the magnetic anisotropy occurs in the thin film magnetic medium such that the easy direction of magnetization coincides with the incident direction of sputtering particles. This is a disadvantage because the coercive force and squareness ratio of a magnetic medium become smaller as the direction of magnetic anisotropy deviates more from the easy direction of magnetization. Therefore, the in-plane magnetic anisotropy that occurs in the embodiment of the invention makes the magnetic recording unit superior in coercive force and squareness ratio to that produced by the conventional technique. Thus, the magnetic recording disc of the present invention has an improved S/N ratio and an increased recording density.

The embodiment of the invention will be described in more detail in the following.

Example 1a

The paramagnetic substrate 101 was prepared by coating an aluminum alloy disc with an Ni-P alloy by electroless plating. The plating surface was mirror-finished so that the maximum roughness was smaller than 0.04 μm.

The middle layer 102, 0.05 to 0.5 μm thick, was formed on the paramagnetic substrate 101 by the oblique sputtering of a paramagnetic metal, with the incident angle θ being greater than 45°. The paramagnetic metal was selected from the group of Cr, Mo, W, V, Nb, and Ta, or the group of Ti, Zr, and Zn. The middle layer 102 was composed of crystal grains of body-centered cubic structure or close-packed hexagonal structure.

The thin film magnetic medium about 0.17 μm thick was formed on the middle layer 102 by the sputtering of a magnetic material, with the incident angle θ smaller than 45°. The magnetic material was Co-doped $\gamma$-$Fe_2O_3$. The thus

formed thin film magnetic medium 103 was of continuous structure.

While the middle layer 102 was being formed, the paramagnetic substrate 101 was turned under a covering mask having an opening, so that the direction of sputtering was kept constant all over the paramagnetic substrate 101 and the easy direction of magnetization 106 of the thin film magnetic medium 103 coincided with the circumferential direction of the magnetic recording unit as shown in Fig. 3.

The thin-film magnetic medium 103 of Co-doped $\gamma$-$Fe_2O_3$ formed on the middle layer 102 of different material, 0.3 $\mu m$ thick, was examined for coercive force and squareness ratio. The material for the middle layer was Cr, Mo, W, V, Nb, and Ta. The results are shown in Table 1 in comparison with the performance obtained by the conventional technology.

0227069

Table 1

| No. | Middle layer (Material & process) | Coercive force (Oe) | Square-ness ratio | Thin film magnetic medium |
|---|---|---|---|---|
| 1 | -- | 500 | 0.75 | $Co-\gamma-Fe_2O_3$ |
| 2 | Cr (oblique sputtering)<br>Cr (normal sputtering) | 700<br>600 | 0.9<br>0.8 | $Co-\gamma-Fe_2O_3$<br>$Co-\gamma-Fe_2O_3$ |
| 3 | Mo (oblique sputtering)<br>Mo (normal sputtering) | 750<br>650 | 0.9<br>0.8 | $Co-\gamma-Fe_2O_3$<br>$Co-\gamma-Fe_2O_3$ |
| 4 | W (oblique sputtering)<br>W (normal sputtering) | 750<br>650 | 0.9<br>0.8 | $Co-\gamma-Fe_2O_3$<br>$Co-\gamma-Fe_2O_3$ |
| 5 | V (oblique sputtering)<br>V (normal sputtering) | 700<br>600 | 0.9<br>0.8 | $Co-\gamma-Fe_2O_3$<br>$Co-\gamma-Fe_2O_3$ |
| 6 | Nb (oblique sputtering)<br>Nb (normal sputtering) | 750<br>650 | 0.9<br>0.8 | $Co-\gamma-Fe_2O_3$<br>$Co-\gamma-Fe_2O_3$ |
| 7 | Ta (oblique sputtering)<br>Ta (normal sputtering) | 750<br>650 | 0.9<br>0.8 | $Co-\gamma-Fe_2O_3$<br>$Co-\gamma-Fe_2O_3$ |

In Experiment No. 1 shown in Table 1, the thin film magnetic medium 103 was formed directly on the paramagnetic substrate 101, with the middle layer 102 not formed. In each of Experiment Nos. 2 to 7, the embodiment of the invention (upper row) is compared with the result of the experiment (lower row) in which the middle layer was formed by the normal sputtering with the incident angle smaller than 45°.

It is apparently noted from Table 1 that an increase more than 200 Oe in coercive force and an increase of 0.15 in squareness ratio were achieved in the case of the thin film magnetic medium 103 formed on the middle layer 102 of body-centered cubic structure formed by oblique sputtering, as compared with those of the thin film magnetic layer formed directly on the substrate (in Experiment No. 1). It is also noted that the coercive force and squareness ratio in the case of oblique sputtering are higher by about 100 Oe and 0.1, respectively, as compared with those in the case of normal sputtering. Incidentally, the thickness of the middle layer was 0.3 µm in the experiments shown in Table 1; but it was confirmed that the same effect is produced so long as the thickness is in the range of 0.1 to 0.5 µm.

Example 1b

The same experiments as in Example 1a were repeated except that the middle layer 102 was formed from Ti, Zr, or Zn. The results are shown in Table 2.

Table 2

| No. | Middle layer (Material & process) | Coercive force (Oe) | Squareness ratio | Thin film magnetic medium |
|---|---|---|---|---|
| 1 | -- | 500 | 0.75 | $Co-\gamma-Fe_2O_3$ |
| 2 | Ti (oblique sputtering) | 650 | 0.9 | $Co-\gamma-Fe_2O_3$ |
|   | Ti (normal sputtering) | 600 | 0.8 | $Co-\gamma-Fe_2O_3$ |
| 3 | Zr (oblique sputtering) | 700 | 0.9 | $Co-\gamma-Fe_2O_3$ |
|   | Zr (normal sputtering) | 650 | 0.8 | $Co-\gamma-Fe_2O_3$ |
| 4 | Zn (oblique sputtering) | 650 | 0.9 | $Co-\gamma-Fe_2O_3$ |
|   | Zn (normal sputtering) | 600 | 0.8 | $Co-\gamma-Fe_2O_3$ |

In Experiment No. 1 shown in Table 2, the thin-film magnetic medium 103 was formed directly on the paramagnetic substrate 101, with the middle layer 102 not formed. In each of Experiment Nos. 2 to 4, the embodiment of the invention (upper row) is compared with the result of the experiment (lower row) in which the middle layer was formed by the normal sputtering with the incident angle smaller than 45°.

It is apparently noted from Table 2 that an increase more than 150 Oe in coercive force and an increase of 0.15 in squareness ratio were achieved in the case of the thin film magnetic medium 103 formed on the middle layer 102 of close-packed hexagonal structure formed by oblique sputtering, as compared with those of the thin film magnetic layer formed directly on the substrate (in Experiment No. 1). It is also noted that the coercive force and squareness ratio in the case of oblique sputtering are higher by about 50 Oe and 0.1, respectively, as compared with those in the case of normal sputtering. Incidentally, the thickness of the middle layer was 0.3 μm in the experiments shown in Table 2; but it was confirmed that the same effect is produced so long as the thickness is in the range of 0.1 to 0.5 μm.

Example 2a

The same experiments as in Example 1a were repeated except that the thin film magnetic medium 103 was formed from Co. Coercive force increased by about 100 Oe and squareness ratio increased from 0.9 to 0.95 as compared with the case in which the middle layer was formed by normal sputtering. The middle layer produced the effect when the layer thickness was in the range of 0.1 to 0.5 μm.

Example 2b

The same experiments as in Example 1b were repeated except that the thin film magnetic medium 103 was formed from Co. Coercive force increased by about 50 Oe and squareness ratio increased from 0.9 to 0.95 as compared with the case in which the middle layer was formed by normal sputtering. The middle layer produced the effect when the layer thickness was in the range of 0.1 to 0.5 μm.

Example 3a

The same experiments as in Example 1a were repeated except that the thin film magnetic medium 103 was formed from Co-30%Ni alloy. Coercive force increased by about 100 Oe and squareness ratio increased from 0.9 to 0.95 as compared with the case in which the middle layer was formed by normal sputtering. The middle layer produced the effect when the layer thickness was in the range of 0.1 to 0.5 μm.

Example 3b

The same experiments as in Example 1b were repeated except that the thin film magnetic medium 103 was formed from Co-30%Ni alloy. Coercive force increased by about 50 Oe and squareness ratio increased from 0.9 to 0.95 as compared with the case in which the middle layer was formed by normal sputtering. The middle layer produced the effect when the layer thickness was in the range of 0.1 to 0.5 μm.

It was demonstrated that the thin film magnetic medium is greatly improved in magnetic characteristics when the middle layer is formed by oblique sputtering between the paramagnetic substrate and the thin film magnetic medium, said middle layer being composed of paramagnetic metal crystal grains of body-centered cubic structure or close-packed hexagonal structure.

In the above-mentioned examples, the thin film magnetic medium was made of Co-$\gamma$-Fe$_2$O$_3$, Co, or Co-30%Ni alloy; but the scope of the invention is not limited to them. Any material can be used so long as it forms crystal grains of body-centered cubic structure or close-packed hexagonal structure by the oblique sputtering.

According to the process of the invention, it is possible to form the in-plane magnetic anisotropy in the thin film magnetic medium. Therefore, it has greatly increased coercive force and squareness, which leads to a great improvement in recording density with a decreased S/N ratio.

- 16 -

WHAT IS CLAIMED IS:

1. Magnetic disc comprising:

at least one base material (101) that is made of paramagnetic material and that gives a shape to the said magnetic disc,

a middle layer material (102) that consists of diagonal structure of paramagnetic metal and that is formed on a surface of the said base material (101), and

at least one magnetic thin film (103) that is sufficiently made of feromagnetic material and that is formed on a surface of the said middle layer material (102).

2. Method of producing a magnetic disc of claim 1 wherein:

the said middle layer material (102) is formed with sputtered particles which irradiate the said surface of the said base material (101) in a diagonal direction (θ) and which is at least one metal selected from following Cr, Mo, W, V, Nb, Ta, Ti, Zr and Zn.

3. Method according to claim 2 wherein:

the said sputtered particles irradiate the said surface of the said base material (101) in a direction inclined more than 45° ($\theta \geqq 45°$) with respect to the straight line (105) perpendicular to the said surface of the said base material (101), and

the said middle layer (102) is made 0.1 to 0.5 μm thick.

0227069

# FIG. 1

# FIG. 2

022706

0227069

0227069

## FIG. 3

107

106, 108

## FIG. 4

$\ell$

$M$

$M_s$

$M_r$

$-H_c$

$H_q$

$H$